# EUROPEAN PATENT APPLICATION

(11) **EP 1 962 459 A2**
(43) Date of publication of application: **27.08.2008**
(21) Application number: 08003203.0
(22) Date of filing: 21.02.2008
(51) Int. Cl.: H04L 12/56

(54) **Data communication system and session management server**

(30) Priority: 22.02.2007 JP 2007041670
(71) Applicant: Hitachi, Ltd., Chiyoda-ku Tokyo 100-8280 (JP)
(72) Inventor: Kaji, Tadashi, Chiyoda-ku Tokyo 100-8220 (JP); Fujishiro, Takahiro, Chiyoda-ku Tokyo 100-8220 (JP); Yato, Akifumi, Chiyoda-ku Tokyo 100-8220 (JP); Hoshino, Kazuyoshi, Chiyoda-ku Tokyo 100-8220 (JP); Tsuge, Munetoshi, Chiyoda-ku Tokyo 100-8220 (JP)
(74) Representative: Strehl Schübel-Hopf & Partner

(57) **Abstract**

A data communication system is provided that is capable of increasing or decreasing the number of session management servers flexibly, and is further capable of implementing data communication while distributing the message processing load in the session management server.' The data communication system includes multiple communication devices which perform data communications mutually, multiple session management servers which manage sessions of data communication between the communication devices, and a load balancer which assigns the session management servers for processing a message received from the communication device according to a predetermined criterion, wherein, the session management server is provided with a unit for managing a currently logged-in communication device and a state of the communication performed by the communication device, and a unit for acquiring information necessary for performing communication with the communication device.

## Description

This application claims priority based on the Japanese Patent Application No. 2007-041670 filed on February 22, 2007, the entire content of which is hereby incorporated by reference.

### BACKGROUND OF THE INVENTION

The present invention relates to a data communication method and system. More particularly, it relates to a data communication method and system that enable data communication between communication devices by using a session management server apparatus.

When data communication is performed between two entities (for example, the entities may be devices, or processes embodied by executing software on the devices), a communication control protocol is often used, which is independent of the data communication, in order to exercise control over the data communication, such as enabling the data communication or shutting down the data communication. As an example, in IP telephony a protocol known as "SIP (Session Initiation Protocol)" is widely used as the communication control protocol (for details of the SIP, see IETF, RFC 3261: SIP: Session Initiation Protocol, <URL: http://www.ietf.org/rfc/rfc3261.txt> (hereinafter referred to as Patent Document 1").

Below, operations will be briefly explained, in cases where a communication session (hereinafter, simply referred to as "session") is established between a first communication device and a second communication device, by using a session management server, thereby enabling the data communication in the SIP.

Firstly, prior to the communication session establishing process, the first communication device registers an IP address of the communication device in the session management server. In other words, the communication device transmits to the session management server, a registration request message (also referred to as "REGISTER message") including an identifier (also referred to as "SIP-URI") for uniquely specifying the communication device or a user thereof in the session management server, and an IP address of the communication device. The session management server records the identifier and the IP address described in the registration request message, such that the identifier and the IP address are associated with each other.

The configuration is such that an association between the identifier and the IP address of a certain communication device, being recorded in the session management server, is deleted after a lapse of an effective period that is set when the association is recorded. Alternatively, the association can be deleted by sending, from the communication device, a registration deletion request message (for example, a directive setting zero as the effective period of the association is included in the aforementioned REGISTER message).

In addition, in the present specification, a state where the identifier and the IP address of a communication device (entity), being associated with each other, are recorded in the session management server is referred to as "the communication device being logged into the session management server". On the other hand, the state where these elements are not recorded is referred to as "the communication device being logged out of the session management server".

This login action enables a transmission of an INVITE message (described below), which the session management server has received from a source communication device, to a destination communication device. On the other hand, the session management server becomes available for accepting the INVITE message or the like from the destination device.

In a similar manner, prior to the session establishment, the second communication device also is logged into the session management server.

Next, a process for establishing a session between the first communication device and the second communication device is performed.

In other words, the first communication device transmits, to the session management server, a session establishment request (hereinafter, also referred to as "INVITE message"), which requests establishment of a session between the first communication device and the second communication device. An identifier of the first communication device and an identifier of the second communication device are described in the INVITE message. The session management server which has received the INVITE message transmits this INVITE message to the second communication device. When the second communication device which received the INVITE message accepts the session establishment request, the second communication device transmits, to the session management server, a response message (also referred to as "200 OK message") representing the acceptance. The session management server returns the response message to the first communication device. At the time when the first communication device receives the response message, the communication session between the first communication device and the second communication device is established.

In the descriptions above, operations of the SIP have been explained for cases in which the first communication device establishes a session with the second communication device by using the session management server, and data communication therebetween is enabled.

Upon receipt of a message from a communication device, the session management server processes the message, while appropriately updating information indicating which communication device currently is logged in, and a communication state between any of the communication devices. The state of the communication is also referred to as "call state", representing "calling", "established", "shutting down communication", or the like. Therefore, as the number of the communication devices that are logged into the session management server increases, the load on the session management server becomes heavier.

In view of the above problem, as described in Patent Document 1, a method is known in which multiple session management servers are linked and utilized, each provided with a function to control the communication session between two communication devices, and with this configuration, the number of the communication devices being managed by one session management server decreases, and, the load on the session management server can be reduced. In other words, when the first communication device establishes a session with the second communication device in the state where the first communication device is logged into the first session management server and the second communication device is logged into the second session management server, the first communication device firstly transmits the INVITE message to the first session management server. The first session management server which has received the INVITE message transfers the INVITE message to the second session management server. The second session management server transfers the INVITE message to the second communication device. In a similar manner, the second communication device transmits a response message to the second session management server. The second session management server which received the response message transfers the response message to the first session management server. The first session management server transfers the response message to the first communication device.

If the function of linking multiple session management servers is used as described in Patent Document 1, the SIP-URI of the communication device includes information indicating which session management server manages the communication device. By way of example, if the SIP-URI is "USERI@SIPSERVER1.HITACHI.COM", in general "SIPSERVER1.HITACHI.COM" indicates information for identifying the session management server (usually, it is referred to as a "domain"). The session management server manages a table in which the server's own IP address and identification information of a linked session management server are associated with each other, and decides a session management server to which a message is transmitted.

There is also a method for distributing the load on the session management server, by using multiple session management servers and a load balancer which distributes messages from the communication devices according to a predetermined criterion.

For instance, the specification of Japanese Patent No. 3730545 (hereinafter, referred to as "Patent Document 2") discloses a method that stores a call state in a database that is readable and writable from the multiple session management servers, and an available server among the multiple servers performs processing.

It is to be noted here that Patent Document 1 states that an encrypted communication protocol such as TLS and S/MINE is employed in order to prevent tapping and/or tampering of communication data between the session management server and the communication device.

Currently, in many cases, there is a need to describe, in a domain name, an organization to which the communication device belongs, not the identification information of the session management server. In other words, the communication devices belonging to the same organization are required to have the same domain name, such as "USER1@HITACHI.COM" and "USER2@HITACHI.COM". With the domain name as such, the organization to which the communication device belongs can be uniquely identified, just by checking the domain name of the communication device. However, if the load balancing is carried out by using a function which links multiple session management servers, the domain of the SIP-URI of the communication device has to include identification information specifying the session management server, and therefore, there is a problem in that the above requirement cannot be fulfilled.

In addition, there is also a problem in that if the load balancing is performed by using the function which links multiple session management servers, once an SIP-URI is assigned to the communication device at the time when an administrator performs an initial setting of the communication device, or the like, it is not possible to change the session management server as a login target, without changing the setting of the communication device. Therefore, it may result in troublesome operation, for example, in cases where the number of communication devices being operated by ten session management servers decreases, and accordingly, it is needed to decrease the number of the session management servers from ten to eight.

According to the load balancing method described in Patent Document 2, the load balancer dynamically chooses a session management server for processing and distributing the message, and therefore, the problem as' described above is not present.

However, in the load balancing method described in Patent Document 2, if the TLS communication is employed between the session management server and the communication device, a communication session is held between a communication device and the session management server that has processed a REGISTER message of this communication device. Therefore, if the session management server, which received from the first communication device an INVITE message requesting communication between the first communication device and the second communication device, is not the session management server that has processed the REGISTER message of the second communication device, there is a problem in that this session management server cannot establish communication with the second communication device.

Here, holding the communication session indicates, for example, sharing of state information indicating to what extent data has been transmitted or received, in both of the data transmitting source and the data receiving end. Therefore, the problem above may occur not only in the TLS, but also in a connection-type communication typified by TCP, which performs communication and also checking whether the data has reached the destination, even while the data is being communicated.

Therefore, in the load balancing method as described in Patent Document 2, there is a problem in that it is difficult to satisfy both reliable communication and secure communication.

### SUMMARY OF THE INVENTION

The present invention provides a data communication system which allows load balancing of session management servers without incorporating identification information of the session management server into identification information of a communication device.

In addition, the present invention provides a data communication system which allows a flexible increase and decrease in the number of session management servers.

Even more particularly, the present invention provides a data communication system which enables implementation of data communication while distributing a message-processing load applied on the session management servers, even when communication which needs common information is performed between the session management server and the communication device.

Specifically, the present invention is primarily directed to a data communication system including multiple communication devices which perform data communication mutually, multiple session management servers which manage a session of data communication between the communication devices, and a load balancer which assigns any of the session management servers according to a predetermined criterion for processing a message received from any of the communication devices, wherein, the session management servers are provided with, a unit for managing a currently logged-in communication device and a state of the communication performed by the login communication device, and a unit for acquiring information necessary for communicating with any of the communication devices.

The information necessary for communicating with the communication device corresponds to information relating to the session management server that manages the communication device, and common information for holding a communication session with the communication device.

More specifically, the data communication system provided by the present invention includes multiple session management servers which manage a session of the data communication between the communication devices, a load balancer which assigns, to any of the session management servers according to a predetermined criterion, a communication message from a first communication device to a second communication device, the message not being provided with information for identifying the session management server that manages the second communication device, and a unit which causes the session management server that received the communication message from the load balancer to acquire information necessary for communicating with the second communication device.

It is to be noted that the information necessary for communicating with the second communication device may be identification information for specifying the session management server to which the second communication device is logged in.

Furthermore, the unit which causes the session management server to acquire information necessary for communicating with the second communication device may include, an inquiring unit in which the session management server that received the message of session establishment request inquires other session management server whether or not the second communication device is logged in, and a responding unit, in which a session management server to which the second communication device is logged in, makes a response, indicating that the second communication device is logged in thereto, to the session management server that received the message of session establishment request.

The unit which causes the session management server to acquire information necessary for communicating with the second communication device may further include a shared database which is accessible to the multiple session management servers, and which records identification information for identifying the session management server to which the communication device is logged in, and a searching unit in which the session management server that has received the message of session establishment request searches the shared database.

The communication message may be a session establishment request message or a session establishment response message.

The information necessary for communicating with the second communication device may be an encrypted communication setting used for communicating with the second communication device, and the unit which causes the session management device to acquire information for communicating with the second communication device may include a shared database which is accessible to the multiple session management servers, for recording the encrypted communication setting used for communicating with the second communication device, and a searching unit in which the session management server that received the session establishment request message searches the shared database.

The communication message may be a call information search request message or a call information search response message.

It is to be noted here that the identification information for specifying the session management server may be a domain name, a host name, an IP address, a URI, or the like.

According to the above aspect of the invention, the session management server to which the communication device is logged into is selected by the load balancer when the communication device transmits a REGISTER message. Therefore, in the SIP-URI domain of the communication device, parent organization information can be described instead of the identification information of the session management server, and simultaneously enabling an operation to increase or decrease the number of the session management servers, according to the number of communication devices.

Furthermore, according to the above aspect of the invention, the session management server acquires information necessary for communicating with the communication device being a message-sending destination, and transmits the message. Therefore, even when the communication is performed, which requires common information between the session management server and the communication device, data communication can be implemented while distributing the message-processing load that is applied on the session management server.

According to the present invention, a load balancing method is possible which satisfies both reliable communication and secure communication.

In addition, even when multiple SIP servers belonging to the same domain are used, load balancing is enabled.

These and other benefits are described throughout the present specification. A further understanding of the nature and advantages of the invention may be realized by reference to the remaining portions of the specification and the attached drawings.

### BRIEF DESCRIPTION OF DRAWINGS

FIG. 1 illustrates a system configuration of the first embodiment;
FIG. 2 is a block diagram showing a hardware configuration of a system in each embodiment;
FIG. 3 illustrates a sequence in cases where a communication device 51 and a communication device 52 as shown in FIG. 1 perform a login process to SIP servers;
FIG. 4 illustrates a sequence in cases where the communication device 51 as shown in FIG. 1 receives a service from the communication device 52;
FIG. 5 illustrates flow for processing an INVITE message in an SIP server as shown in FIG. 1;
FIG. 6 illustrates messages for acquiring information necessary for the SIP server as shown in FIG. 1 to establish communication;
FIG. 7 illustrates flow for processing a SIP server search request message in the SIP server as shown in FIG. 1;
FIG. 8 illustrates a system configuration of a second embodiment;
FIG. 9 illustrates a sequence in cases where the communication device 51 and the communication device 52 as shown in FIG. 8 perform a login process to the SIP servers;
FIG. 10 illustrates a sequence in cases where the communication device 51 as shown in FIG. 8 receives a service from the communication device 52;
FIG. 11 illustrates flow of processing in the SIP server when the communication device as shown in FIG. 8 performs logging in;
FIG. 12 illustrates flow for processing the INVITE message in the SIP server as shown in FIG. 8;
FIG. 13 illustrates a sequence when the communication device as shown in FIG. 8 performs logging out;
FIG. 14 illustrates flow of processing in the SIP server in cases where the communication device as shown in FIG. 8 performs logout;
FIG. 15 illustrates a system configuration of a third embodiment;
FIG. 16 illustrates a sequence in cases where the communication device 51 as shown in FIG. 15 performs a login process to the SIP server; and
FIG. 17 illustrates a sequence in cases where the communication device 51 as shown in FIG. 15 receives a service from the communication device 52.

### DESCRIPTION OF THE EMBODIMENT

Hereinafter, preferred embodiments of the present invention will be explained, with reference to the accompanying drawings. It is to be noted that those embodiments do not restrict the scope of the present invention.

Examples in which the present invention is applied to the SIP will be explained in the following. However, in addition to the SIP, the present invention can be applied to a system for transmitting and receiving a session establishment request message and a response message, via the session management server, when a communication session is established.

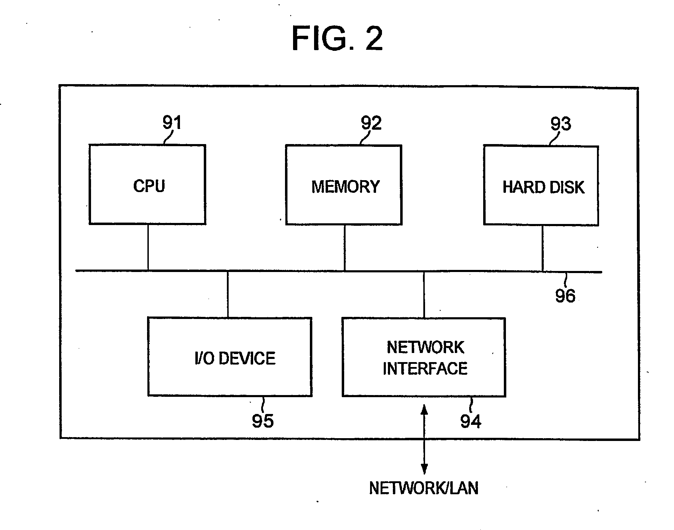

Even more particularly, the following embodiments incorporate devices as illustrated by the configuration example in FIG. 2: for instance, a processor (CPU) 91, a memory 92 and/or a hard disk 93 for storing various software (programs) executed by the processor 91 and data, a network interface 94 for coupling with network 0 (LAN 1, LAN 2), and an I/O device 95 including an input device such as a mouse and a keyboard, a display device, and a reader/writer for reading to and writing from an external storage medium, and each of the devices is implemented in a general electronic computer where the elements above are mutually coupled via internal communication lines (referred to as "bus") 16.

In other words, a processing unit provided in each device and its processing stage in each of the following embodiments are implemented, with the processor 91 executing necessary programs stored in the hard disk 93 or in the memory 92 at a necessary timing in each of the devices. These programs may be stored in advance in the hard disk 93 or in the memory 92 within each device. Alternatively, these programs may be introduced from another device, when needed, into the storage above via a medium available for the device. Here, the medium may represent, for example, a detachable storage medium available in the I/O device 95, or a communication medium available via the network interface 94 (i.e., a network, or a carrier wave or a digital signal propagating through the network). It is further possible to configure each processing unit described above as hardware such as an integrated circuit.

Here, it is to be noted that identifiers such as domain name, URL, URI, and IP address used in the following embodiments are hypothetical for illustrative purposes, and have no relationship with actual entities.

### <Embodiment 1>

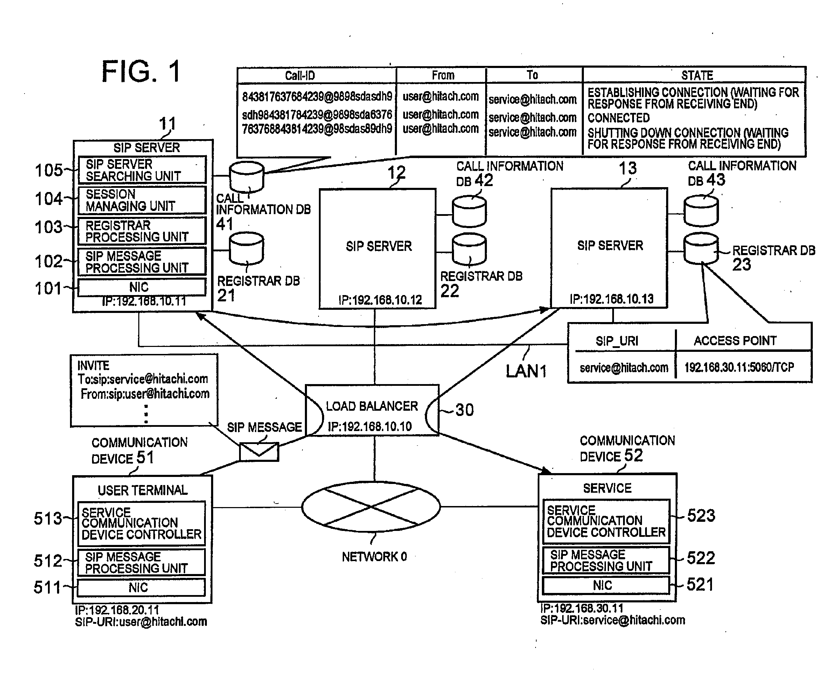

Initially, a first embodiment will be explained with reference to FIG. 1 to FIG. 7.

FIG. 1 illustrates a system configuration of the first embodiment.

The system illustrated here incorporates three SIP servers (SIP server 11, SIP server 12, SIP server 13) being session management servers, a load balancer 30, a communication device (user terminal) 51 used by a user for performing data communication for a service, and a communication device 52 for providing the service. Three SIP servers and the load balancer 30 are coupled via the LAN 1, and further, the load balancer 30, the communication device 51, and the communication device 52 are coupled via the network 0.

In addition, the SIP server 11 is assigned an IP address of 192.168.10.11, and it is provided with a registrar DB 21 for managing the communication device logging into the SIP server 11, and a call information DB 41 for managing information of a communication session managed by the SIP server 11. A software structure of the SIP server 11 incorporates a network interface card (NIC) controller 101 for establishing communicating with other SIP server and the load balancer 30 via the LAN 1, an SIP message processing unit 102 for processing an SIP message, a registrar processing unit 103 for controlling the processing for the registrar DB 21, a session managing unit 104 for controlling the processing for the call information DB 41, and an SIP server searching unit 105 that makes a search for an SIP server to which a target communication device is logged in.

In addition, the SIP server 12 is assigned an IP address of 192.168.10.12, and it is provided with a registrar DB 22 for managing the communication device logging into the SIP server 12 and a call information DB 42 for managing information of a communication session managed by the SIP server 12, having a software structure similar to the SIP server 11. Furthermore, the SIP server 13 is assigned an IP address of 192.168.10.13, and it is provided with a registrar DB 23 for managing the communication device logging into the SIP server 13, and a call information DB 43 for managing information of a communication session managed by the SIP server 13, also having a software structure similar to the SIP server 11.

The load balancer 30 is a device that has functions for receiving a message from the communication device via the network 0 in an integrated manner, and transferring the message to the SIP servers. The load balancer is assigned an IP address of 192.168.10.10. It is to be noted that the load balancer 30 used in the present embodiment has a function in that, if another message is received from the same communication device within a predetermined period, the load balancer 30 transfers the message to the SIP server to which a message was transferred just before.

In addition, an IP address of 192.168.20.11 and SIP-URI of user@hitachi.com are assigned to the communication device 51. The software structure of the communication device 51 includes a network interface card (NIC) controller 511 for communicating with the load balancer 30 and the communication device 52 via the network 0, an SIP message processing unit 512 for processing the SIP message, and a service communication device controller 513 for obtaining a service provided by the communication device 52.

An IP address of 192.168.30.11 and SIP-URI of service@hitachi.com are assigned to the communication device 52. The software structure of the communication device 52 includes a network interface card (NIC) controller 521 for communicating with the load balancer 30 and the communication device 51 via the network 0, an SIP message processing unit 522 for processing the SIP message, and a service communication device controller 523 for providing a service to the communication device 51.

Hereinafter, the first embodiment will be explained, taking a communication procedure as an example, where the communication device 51 as shown in FIG. 1 performs data communication with the communication device 52 shown in FIG. 1.

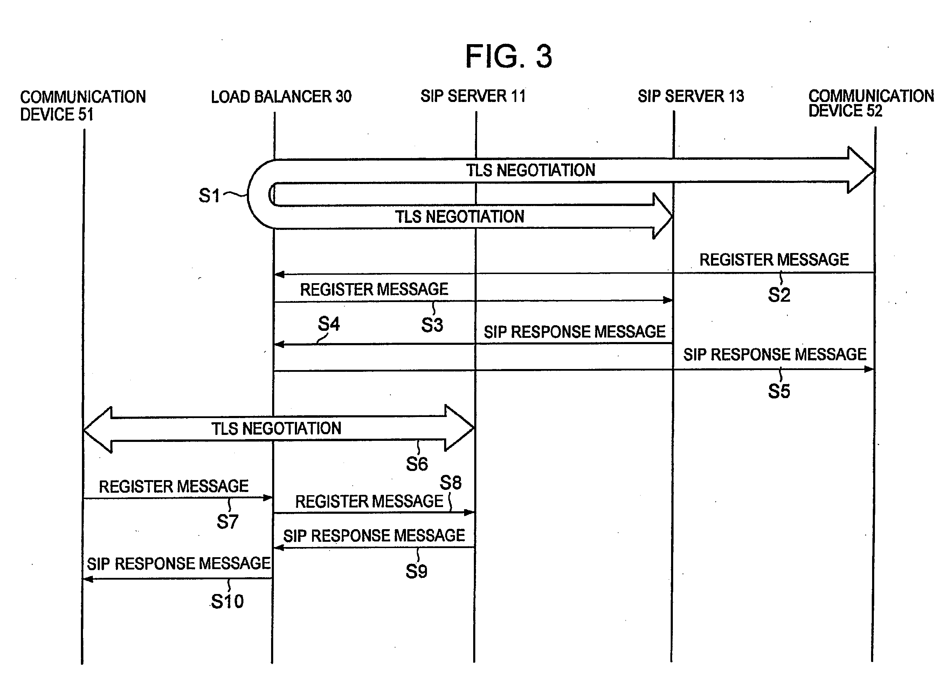

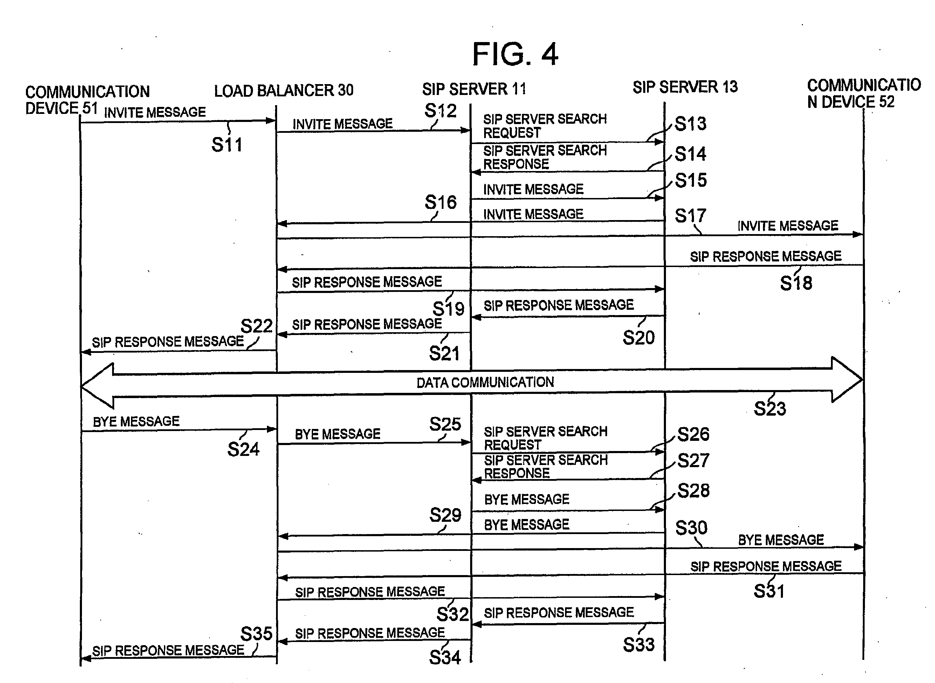

FIG. 3 and FIG. 4 are sequence diagrams showing the data communication according to the first embodiment.

Firstly, in the first embodiment, the communication device 51 and the communication device 52 perform processing to log into the SIP servers.

FIG. 3 is a diagram showing a sequence when the communication device 51 and the communication device 52 perform a login process into the SIP server.

In FIG. 3, initially the communication device 52 performs the login process into the SIP server.

In other words, the communication device 52 performs negotiations for TLS communication with the SIP server, via the load balancer 30 (S1). When the load balancer 30, which received, from the communication device 52, a message requesting the negotiations for TLS communication, selects an SIP server out of three SIP servers for transferring the message, it transfers the message to the selected SIP server. In FIG. 3, the SIP server 13 is selected, and TLS communication is established between the communication device 52 and the SIP server 13. In the TLS communication, the communication device 52 and the SIP server 13 periodically transmit a message to confirm that a communication session is not shut down. Therefore, while the TLS communication is established between the communication device 52 and the SIP server 13, the load balancer 30 is set so that the message from the communication device 52 is constantly transferred to the SIP server 13.

Next, in order to request a location registration, the communication device 52 transmits a REGISTER message within the SIP message to the load balancer 30 (S2). The load balancer 30 that received the REGISTER message transfers the message to the SIP server 13 (S3).

In the SIP server 13 that received the REGISTER message, when the registrar processing unit:103 registers, in the registrar DB 23, location data indicating a relationship between a request source SIP-URI (service@hitachi.com) represented by a From header and a request source IP address (192.168.30.11) represented by a "Contact" header of the received REGISTER message, the SIP message processing unit 102 transmits to the load balancer an SIP response message directed to the communication device 52 in order to notify success in the location registration (S4).

The load balancer 30 that received the SIP response message transmits the message to the communication device 52 (S5).

According to the procedure above, the login of the communication device 52 to the SIP server is completed, and the communication device 52 waits for a service providing request from the communication device 51.

Subsequently, in the present embodiment, the communication device 51 performs the login process to the SIP server.

In other words, the communication device 51 performs negotiations for TLS communication with the SIP server, via the load balancer 30 (S6). When the load balancer 30, which received from the communication device 51 the message requesting the negotiations for TLS communication, selects an SIP server out of three SIP servers for transferring the message, and transfers the message to the selected SIP server. In FIG. 3, the SIP server 11 is selected, and TLS communication is established between the communication device 51 and the SIP server 11. Subsequently, while the TLS communication is established between the communication device 51 and the SIP server 11, the load balancer 30 transfers the message from the communication device 51 constantly to the SIP server 11.

Next, in order to request a location registration, the communication device 51 transmits a REGISTER message to the load balancer 30 (S7). The load balancer 30 which has received the REGISTER message transfers the message to the SIP server 11 (S8).

In the SIP server 11 that has received the REGISTER message, when the registrar processing unit 103 registers in the registrar DB 21 location data indicating a relationship between a request source SIP-URI (user@hitachi.com) represented by a From header and a request source IP address (192.168.20.11) represented by a Contact header of the received REGISTER message, the SIP message processing unit 102 transmits to the load balancer, an SIP response message directed to the communication device 51 in order to notify success in the location registration (S9).

The load balancer 30 that received the SIP response message transmits the message to the communication device 51 (S10).

According to the procedure above, the login of the communication device 51 into the SIP server is completed.

The communication device 51 that has completed the login process requests a servicing from the communication device 52.

FIG. 4 is a diagram showing a sequence in cases where the communication device 51 that has completed the login process receives the servicing from the communication device 52.

Initially, when the communication device 51 requests provision of a service from the communication device 52, the communication device 51 transmits an INVITE message (S11), and the load balancer 30 transfers the INVITE message to the SIP server 11 with which the communication device 51 has established TLS communication (S12).

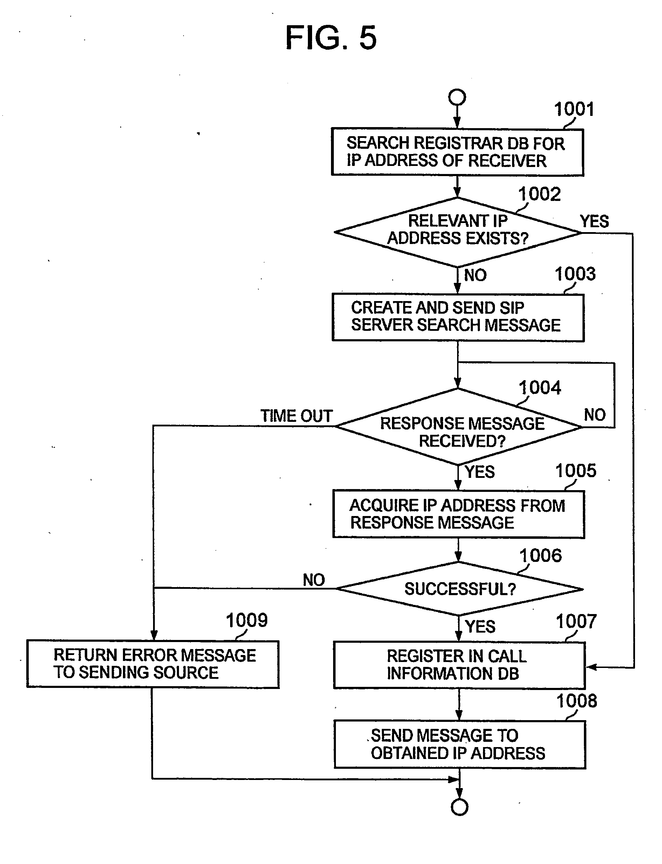

The SIP server 11 that received the INVITE message processes this INVITE message according to the processing flow as shown in FIG. 5.

In other words, in the SIP server 11, the registrar processing unit 103 accesses the registrar DB 21, and makes a search for an IP address of the receiver's SIP-URI indicated by a To header of the INVITE message being received (step 1001).

Here, when a relevant IP address is retrieved from the registrar DB 21, the processing shifts to step 1007, and the session managing unit 104 of the SIP server 11 records in the call information DB 41 identification information of the communication session represented by Call-ID header of the INVITE message and the information that the communication session is in the state of "calling (waiting for a response from the receiving end)".

Next, the INVITE message is transmitted to the retrieved IP address (step 1008). On this occasion, the SIP server 11 adds the identification information of the SIP server 11 to the Via header of the INVITE message.

On the other hand, in step 1001, if a relevant IP address is not retrieved from the registrar DB 21, in order to find the SIP server that manages the communication device indicated by the SIP-URI, the SIP server searching unit 105 creates an SIP server search request message 81, and transmits the SIP server search request message to LAN 1 via the broadcast communication (step 1003, S13).

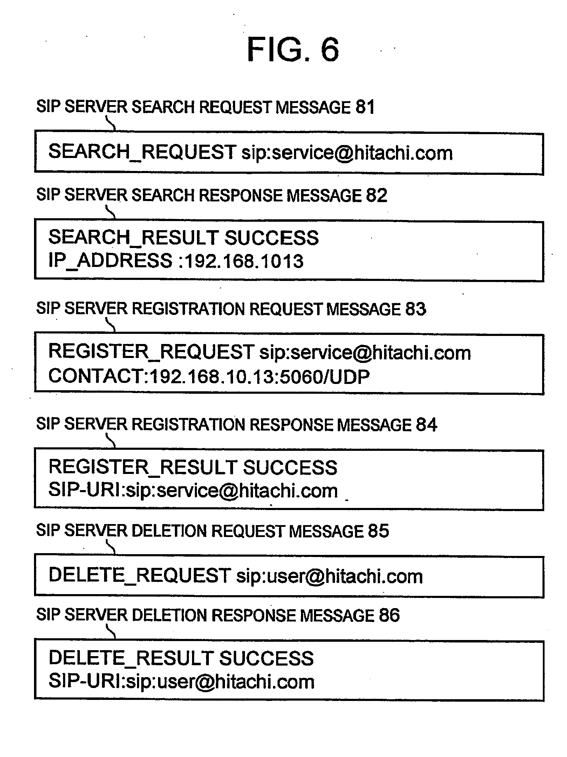

As shown in FIG. 6, the SIP server search request message 81 of the present embodiment is made up of the command line including a search target SIP-URI (in FIG. 6, it is described as "SEARCH_REQUEST sip:service@hitachi.com", and this indicates searching for an SIP server that manages a communication device having the SIP-URI, which is "service@hitachi.com".

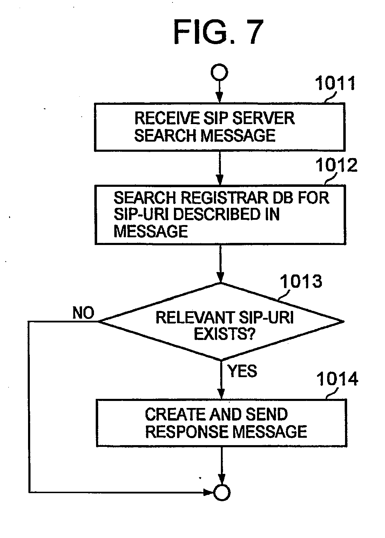

Meanwhile, the SIP server that received the SIP server search request message 81 processes the SIP server search request message 81 according to the processing flow as shown in FIG. 7.

In other words, when the SIP server receives the SIP server search request message 81 in step 1011, the registrar processing unit 103 accesses the registrar DB, and searches the DB for an IP address of the SIP-URI indicated by the command line of the SIP server search request message 81 (step 1012).

Here, if it fails to retrieve a relevant IP address from the registrar DB 21, the processing is terminated.

On the other hand, if a relevant IP address is successfully retrieved from the registrar DB 21, the SIP server searching unit 105 creates an SIP server search response message 82, and transmits the message to a destination indicated by the sending source of the SIP server search request message (step 1014).

As shown in FIG. 6, the SIP server search response message 82 of the present embodiment is made up of the command lines indicating a result of searching for the search target SIP-URI (in FIG. 6, it is described as "SEARCH_RESULT SUCCESS", and this indicates that searching is successful), and identification information for specifying a SIP server that manages the search target SIP-URI (in FIG. 6, it is described as "IP_ADDRESS: 192.168.10.13", and this indicates that the IP address of the SIP server that manages the search target SIP-URI is 192.168.10.13).

In FIG. 4, since the communication device 52 is logged into the SIP server 13, the SIP server 13 transmits the SIP server search response message 82 to the SIP server 11 (S14).

The SIP server 11 which received the SIP server search response message 82 refers to the message and acquires the IP address of the SIP server that manages the communication device (step 1005).

When the SIP server 11 determines that the acquired IP address is an address that is a relevant IP address for the SIP server (e.g., in the case where the SIP server locally manages a list of IP addresses of all the SIP servers, a check is made as to whether or not the IP address is described in this list, or the like) (step 1006), processing shifts to step 1007. Then, the session managing unit 104 of the SIP server 11 records in the call information DB 41 identification information of the communication session indicated by the Call-ID header of the INVITE message, an SIP-URI as a sending source of the INVITE message, an SIP-URI as a destination of the INVITE message, and the fact that the communication session is in the state of "calling (waiting for a response from the receiving end)".

Next, the INVITE message is transmitted to the IP address acquired from the SIP server search response message 82, i.e., in FIG. 4, to the SIP server 13 (step 1008, S15). On this occasion, the SIP server 11 adds identification information of the SIP server 11 to the Via header of the INVITE message.

The SIP server 13 which received the INVITE message processes this INVITE message, according to the processing flow as shown in FIG. 5.

In other words, in step 1001, the registrar processing unit 103 of the SIP server 13 accesses the registrar DB 23, and searches the DB for the IP address of the receiver SIP-URI indicated by the To header of the INVITE message being received.

Here, since the SIP server 13 is an SIP server to which the communication device 52 is logged in, a relevant IP address can be retrieved from the registrar DB 23.

Consequently, the processing of the SIP server 13 shifts to step 1007, and after the session managing unit 104 of the SIP server 13 records in the call information DB 41 identification information of the communication session indicated by the Call-ID header of the INVITE message, identification information of the communication source indicated by the From message, identification information of the communication destination indicated by the To message, and information indicating that the communication session is in the state of "calling (waiting for a response from the receiving end)", the SIP server 13 transmits the INVITE message via the load balancer 30 to the IP address retrieved from the registrar DB 23, i.e., to the communication device 52 (step 1008, S16 and S17) On this occasion, the SIP server 13 adds identification information of the SIP server 13 to the Via header of the INVITE message.

In the communication device 52 that received the INVITE message, the SIP message processing unit 522 checks whether or not the communication requested in the message is acceptable. A result of the checking is created in the form of an SIP response message, and the communication device 52 transmits the message to the load balancer 30 (S18). The load balancer 30 transmits the message to the SIP server 13 (S19).

In the SIP server 13 which received the SIP response message, the SIP message processing unit 102 checks the description of the message, and if it indicates "communication permitted", the session managing unit 104 accesses the call information DB 43, and updates the state of the communication session indicated by the Call-ID header of the message, to "established".

On the other hand, if the state is "communication rejected", the session managing unit 104 accesses the call information DB 43, and deletes the entry regarding the communication session indicated by the Call-ID header of the message.

Next, the SIP server 13 checks the Via header of the SIP response message, and transmits the message to the SIP server 11 (S20).

Similar to the SIP server 13, in the SIP server 11, the SIP message processing unit 102 updates the call information DB 41 according to the description of the message, and the SIP server 11 transmits the SIP response message to the communication device 51, via the load balancer 30 (S21, S22).

In the communication device 51 that has received the SIP response message, the SIP message processing unit 512 checks the description of the message, and if it indicates "communication permitted", the service communication device controller 513 performs data communication with the service communication device controller 523 of the communication device 52 (S23), thereby obtaining the service.

When the use of the service is completed, the communication device 51 transmits a BYE message to the load balancer 30 (S24). The load balancer 30 which has received the BYE message transmits the message to the SIP server 11 (S25).

The SIP server 11 which received the BYE message processes the message according to the processing flow as shown in FIG. 5. As a result, the SIP server 11 transmits the SIP server search request message 81 by broadcast communication in step 1004 (S26), and receives the SIP server search response message 82 from the SIP server 13 (S27). In addition, in step 1007, the session managing unit 104 accesses the call information DB 41, and updates the state of the communication session indicated by the Call-ID header of the BYE message to "shutting down communication (waiting for a response from the receiving end)". In addition, in step 1008, the SIP server 11 transmits the BYE message to the SIP server 13 (S28). At this time, the SIP server 11 adds identification information of the SIP server 11 to the Via header of the BYE message.

Next, the SIP server 13 which has received the BYE message processes the message according to the processing flow as shown in FIG. 5. As a result, in the SIP server 13, the session managing unit 104 accesses the call information DB 43 in step 1007, and the state of the communication session indicated by the Call-ID header of the BYE message is updated to "shutting down communication (waiting for a response from the receiving end)".

In addition, the SIP server 13 transmits the BYE message to the communication device 52 via the load balancer 30 in step 1008 (S29, S30). At this time, the SIP server 13 adds identification information of the SIP server 13 to the Via header of the BYE message.

In the communication device 52 that has received the BYE message, the SIP message processing unit 522 performs processing of shutting down the communication requested by the message, and transmits an SIP response message to the load balancer 30 (S31). The load balancer 30 transmits the message to the SIP server 13 (S32).

In the SIP server 13 which has received the SIP response message, the session managing unit 104 accesses the call information DB 43, and deletes an entry regarding the communication session indicated by the Call-ID header of the message.

Next, the SIP server 13 checks the Via header of the SIP response message, and transmits the message to the SIP server 11 (S33).

Similar to the SIP server 13, when the SIP message processing unit 102 of the SIP server 11 that has received the SIP response message updates the call information DB 41 according to the description of the message, the SIP server 11 transmits the SIP response message to the communication device 51 via the load balancer 30 (S34, S35).

In cases where the SIP server search response message 82 is not returned even after a lapse of a predetermined period of time in step 1004 of FIG. 5, or in cases where a sending source of the message is not obtained from the SIP server search response message 82 in step 1006 of FIG. 5, the SIP server shifts the processing to step 1009, and the SIP message processing unit 102 creates an SIP response message representing an error occurrence, and returns the message to the sending source of the SIP message. For example, such situation as described above may occur in cases where the communication device 51 transmits an INVITE message to the communication device 52, after the communication device 52 logs out.

In the descriptions above, operations in the present embodiment have been explained for cases where the communication device 51 that has completed the login process obtains servicing from the communication device 52.

It is to be noted that in the first embodiment, the session management server manages the call information, and need not necessarily have a shared database.

On the other hand, the load balancing method described in Patent Document 2 updates the shared database every time one message is processed.
Therefore, there is a problem in that a shared database having an extremely high processing performance and a high-speed communication means between the session managing server and the shared database are required. In addition, the load balancing method described in Patent Document 2 has a problem in that if multiple session management servers try to control identical call information simultaneously, the state of the shared database cannot be fixed uniquely.

According to the present embodiment, neither the high-performance shared database nor the high-speed communication means between the shared database and the session management server is necessary. In addition, a situation in which the state of the shared database cannot be fixed uniquely will not occur.

In the first embodiment, an IP address is used as the identification information for specifying the SIP server described in the SIP server search response message 82, but the present invention is not limited to this example. As the identification information for specifying the SIP server, a combination of the IP address and a port number, a domain name, a host name, a URI, a MAC address, or the like, may be employed, instead of the IP address.

In the first embodiment, in order to make a search for the communication device as a destination of the INVITE message or the BYE message, the configuration is such that the SIP server search message is broadcasted to LAN 1. However, the present invention is not limited to this configuration. A configuration is also possible in which an administrator of the LAN 1 sets the multicast communication that reaches multiple SIP servers, and the SIP server transmits an SIP server search message by the use of this multicast communication. In other words, it is possible to prepare a particular IP address to be used as the IP address for the multicasting, and routers in the LAN 1 may be configured such that when the administrator of the LAN 1 receives a packet directed to this IP address, the packet is transferred to the multiple SIP servers.

With the configuration above, it is possible to reduce the network load on the LAN 1, compared to the case where the broadcast communication is utilized. Alternatively, an SIP server manages the IP addresses of other SIP servers, and the SIP server search message is individually transmitted to each of the SIP servers. With this configuration, the load can be distributed even with the SIP servers that belong to different sub domains.

In addition, in the first embodiment, the communication device 51 is designed to start the processing of shutting down the communication, but the present invention is not limited to this configuration. Shutting down process may be executed from the communication device 52.

### <Embodiment 2>

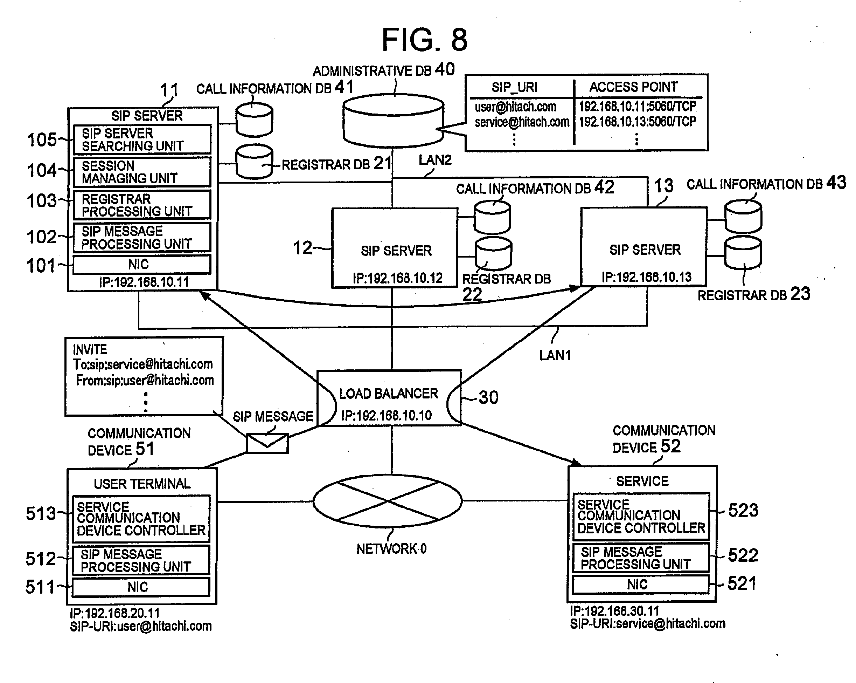

Next, with reference to FIG. 8 to FIG. 14, a second embodiment will be explained.

In the first embodiment as described above, in order to obtain information of the SIP server that manages the communication device, the SIP server searching unit 105 transmits the SIP server search request message 81 by the broadcast communication, the SIP server that has received the SIP server search request message 81 searches the SIP server's own registrar DB, and the SIP server, which is successful in the search, returns the SIP server search response message 82 as a response.

The second embodiment is distinguished in that an administrative DB is provided, which is accessible from the SIP server and performs management as to which SIP server the currently logged-in communication device is logged into.

FIG. 8 illustrates a system configuration according to the second embodiment.

The system illustrated in FIG. 8 incorporates three SIP servers (SIP server 11, SIP server 12, SIP server 13) being session management servers, a load balancer 30, the administrative DB 40 as a feature of the present embodiment, a communication device (also referred to as user terminal) 51 used by a user for performing data communication for a service, and a communication device 52 for providing the service. Three SIP servers and the load balancer 30 are coupled via the LAN 1, three SIP servers and the administrative DB 40 are coupled via the LAN 2, and further, the load balancer 30, the communication device 51, and the communication device 52 are coupled via the network 0.

It is to be noted here that the administrative DB 40 is an information-processing device incorporating the hardware configuration as shown in FIG. 2.

In addition, an IP address of 192.168.10.11 is assigned to the SIP server 11, and the SIP server 11 is provided with a registrar DB 21 for managing the communication device logging into the SIP server 11, and a call information DB 41 for managing information of a communication session managed by the SIP server 11. Software structure of the SIP server 11 incorporates a network interface card (NIC) controller 101 for establishing communicating with another SIP server or the load balancer 30 via the LAN 1, an SIP message processing unit 102 for processing an SIP message, a registrar processing unit 103 for controlling the processing for the registrar DB 21, a session managing unit 104 for controlling the processing for the call information DB 41, and an SIP server searching unit 105 that searches for an SIP server to which a target communication device is logged in.

In addition, the SIP server 12 to which an IP address of 192.168.10.12 is assigned, is provided with a registrar DB 22 for managing the communication device that is logged into the SIP server 12, and a call information DB 42 for managing information of a communication session managed by the SIP server 12, and has a software structure similar to the SIP server 11. Furthermore, the SIP server 13 to which the IP address of 192.168.10.13 is assigned, is provided with a registrar DB 23 for managing the communication device that is logged into the SIP server 13, and a call information DB 43 for managing information of a communication session managed by the SIP server 13, and has a software structure similar to the SIP server 11.

The load balancer 30 is a device that has functions for receiving a message from the communication device via the network 0 in an integrated manner, and transferring the message to the SIP server. The load balancer is assigned an IP address of 192.168.10.10. It is to be noted that the load balancer 30 used in the present embodiment has a function in that if another message is received from the same communication device within a predetermined period, the load balancer 30 transfers the message to the SIP server to which a message was transferred just before.

In addition, an IP address of 192.168.20.11 and the SIP-URI of user@hitachi.com are assigned to the communication device 51. The software structure of the communication device 51 includes a network interface card (NIC) controller 511 for communicating with the load balancer 30 and the communication device 52 via the network 0, an SIP message processing unit 512 for processing the SIP message, and a service communication device controller 513 for obtaining a service provided by the communication device 52.

The IP address of 192.168.30.11 and the SIP-URI of service@hitachi.com are assigned to the communication device 52. The software structure of the communication device 52 includes a network interface card (NIC) controller 521 for communicating with the load balancer 30 and the communication device 51 via the network 0, an SIP message processing unit 522 for processing the SIP message, and a service communication device controller 523 for providing a service to the communication device 51.

Hereinafter, the second embodiment will be explained, taking an example in which the communication device 51 shown in FIG. 8 performs data communication with the communication device 52.

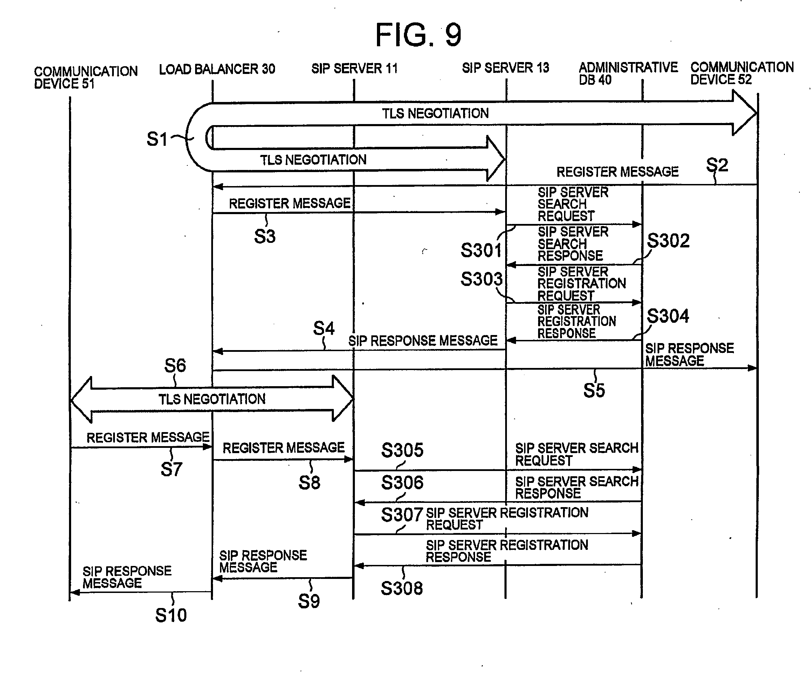

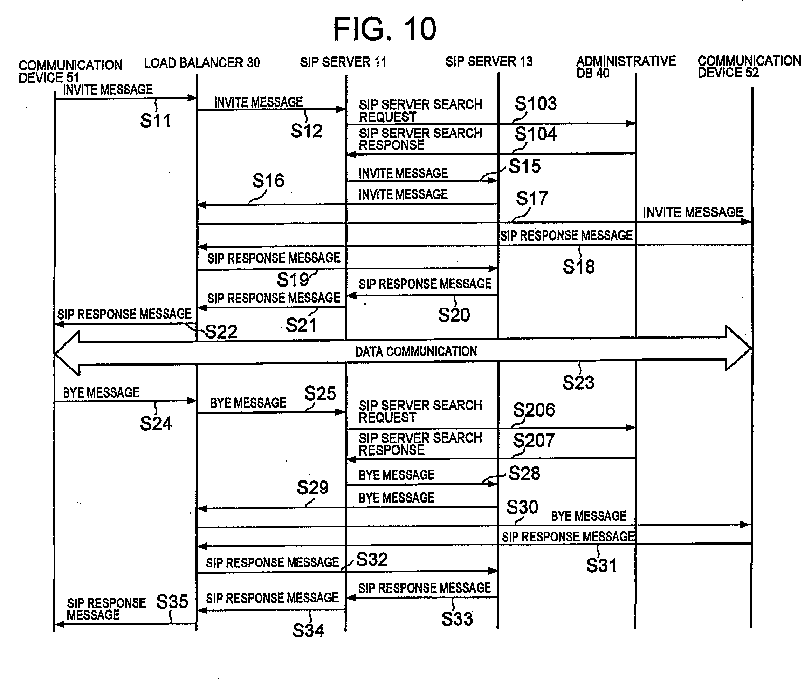

FIG. 9 and FIG. 10 are sequence diagrams showing data communication according to the second embodiment. Explanations will be omitted as much as possible, concerning steps and messages having the same reference characters as FIG. 3 and FIG. 4, which have already been explained in the first embodiment.

Firstly, also in the second example, the communication device 51 and communication device 52 perform a login process to the SIP servers.

FIG. 9 is a diagram showing a sequence when the communication device 51 and the communication device 52 perform the login process to the SIP servers.

Also in the present embodiment, the communication device 52 firstly establishes the TLS communication with the SIP server 13, and thereafter transmits a REGISTER message to request the login process (S1 to S3, and S6 to S8).

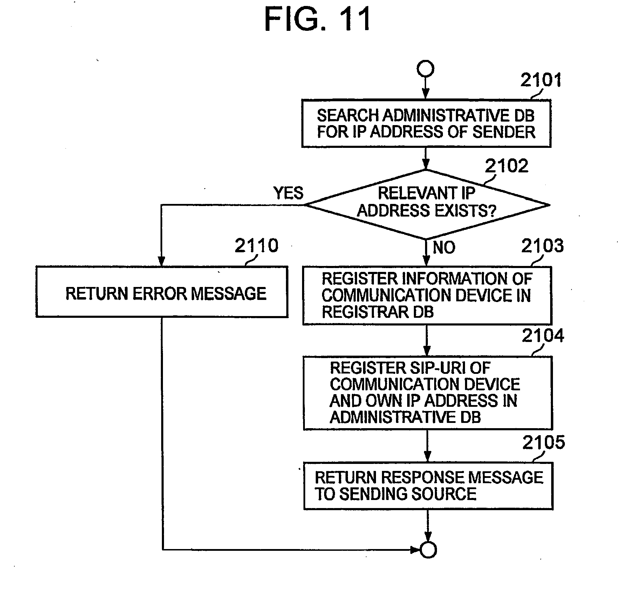

On this occasion, the SIP server 13 processes the REGISTER message according to the processing flow as shown in FIG. 11. In other words, in step 2001, the SIP server 13 which received the REGISTER message, transmits an SIP server search request message 81 to the administrative DB 40 (S301 in FIG. 9), and checks whether or not the communication device that transmitted the REGISTER message, i.e., the SIP-URI of the communication device 52, has already been registered in the administrative DB 40. An SIP server search response message 82 is received from the administrative DB 40 (S302 in FIG. 9), and if the SIP-URI of the communication device 52 has already been registered in the administrative DB 40, the SIP server 13 transmits an SIP response message representing an error, to the communication device 52 via the load balancer 30 (step 2110).

It is to be noted that in the present embodiment, if a search target SIP-URI has not been registered yet, "SEARCH_RESULT FAILURE" is described in the command line of the SIP server search response message 82, in order to indicate failure of searching.

If the SIP-URI of the communication device 52 has not been registered yet in the administrative DB 40, the SIP-URI and the IP address of the communication device 52 are stored in the registrar DB 23, such that they are associated with each other, in step 2103.

Next, the SIP server 13 transmits an SIP server registration request message 83 in step 2104 (S303 of FIG. 9), and associates and registers, in the administrative DB 40, the SIP-URI of the communication device 52 and information of the SIP server to which the communication device 52 is logged in, i.e., the information of the SIP server 13.

As shown in FIG. 6, the SIP server registration request message 83 of the present embodiment is made up of command lines including the registration target SIP-URI (in FIG. 6, it is described as "REGISTER_REQUEST sip:service@hitachi.com", and this indicates that registration of the SIP-URI, service@hitachi.com, is requested) and information of the SIP server that manages the registration target SIP-URI (in FIG. 6, it is described as "CONTACT: 192.168.10.13: 5060/UDP", and this indicates that the IP address of the SIP server that manages the search target SIP-URI is 192.168.10.13, and No. 5060 port of UDP is waiting for the communication).

Next, upon receipt of an SIP server registration response message 84 from the administrative DB 40 (S304 in FIG. 9), the SIP server 13 transmits to the communication device 52 an SIP response message indicating that the login is successful (step 2105).

As shown in FIG. 6, the SIP server registration response message 84 of the present embodiment is made up of command lines, including a registration result of the registration target SIP-URI (in FIG. 6, it is described as "REGISTER_RESULT SUCCESS", and this indicates that the registration is successful) and a line indicating the registration target SIP-URI (in FIG. 6, it is described as "SIP-URI: sip:service@hitachi.com")

According to the procedure above, the login process of the communication device 52 is completed.

The communication device 51 executes the login process in a similar manner.

Next, the communication device 51 which has completed the login process requests provision of a service from the communication device 52.

FIG. 10 is a diagram showing a sequence incases where the communication device 51, which has completed the login process, obtains a service from the communication device 52.

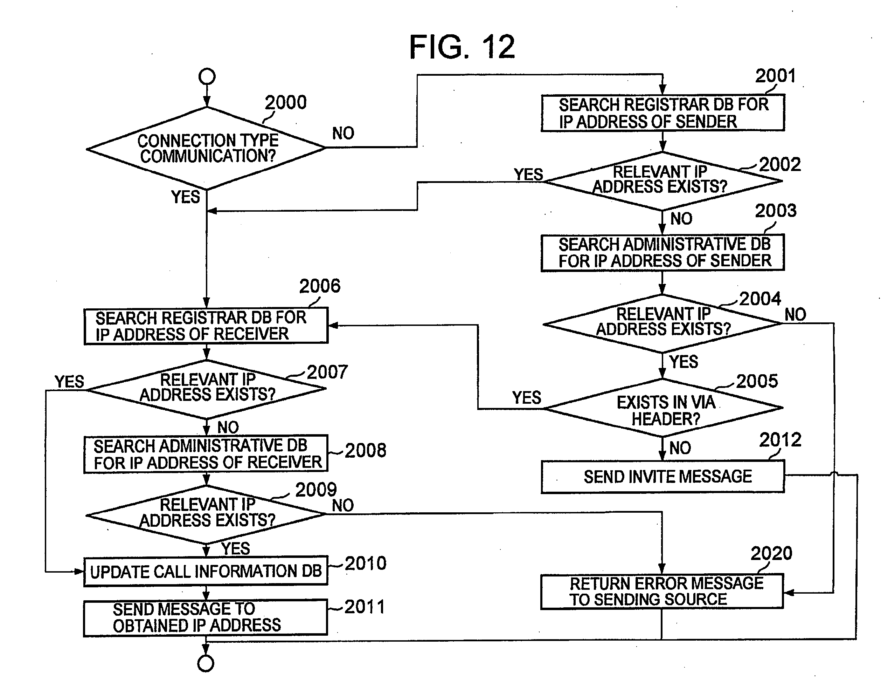

In the sequence from S11 to S12, the SIP server 11 that has received an INVITE message from the communication device 51 via the load balancer 30 processes the INVITE message according to the processing flow as shown in FIG. 12.

In other words, the SIP server 11 initially determines whether or not the present system employs connection-type communication between the communication device and the SIP server (step 2000).

Here, if the connection type communication is used, processing from step 2006 is executed.

On the other hand, if the connection-type communication is not employed, the processing shifts to step 2001, and a check is made as to whether or not the SIP-URI of the sender of the INVITE message (communication device 51 in FIG. 10) is registered in the registrar DB 21.

Here, if the SIP-URI of a sender of the INVITE message is registered, processing from step 2006 is executed.

On the other hand, if the SIP-URI of the sender of the INVITE message is not registered, the processing shifts to step 2003, and an SIP server search request message 81 is transmitted to the administrative DB 41, to make a search for the SIP server to which the sender of the INVITE message is logged in. As a result, if an SIP server, to which the sender of the INVITE message is logged in, does not exist, the processing shifts to step 2020, and the SIP response message indicating an error is transmitted to the sender of the INVITE message.

On the other hand, if the SIP server, to which the sender of the INVITE message is logged in, exists, a check is made as to whether or not information regarding this SIP server exists in the Via header of the INVITE message (step 2005) . In step 2005, if such information does not exist in the Via header of the INVITE message regarding the SIP server to which the sender of the INVITE message is logged in, the SIP server 11 transmits an INVITE message to the SIP server to which the sender of the INVITE message is logged in (step 2012). (On this occasion, it is not necessary for the SIP server 11 to include the information of the SIP server 11 in the Via header of the INVITE message). On the other hand, in step 2005, if there exists information in the Via header of the INVITE message regarding the SIP server to which the sender of the INVITE message is logged in, the SIP server 11 executes the processing from step 2006.

In cases where a connectionless communication is used, it may happen that when a certain communication device transmits an INVITE message, the load balancer 30 transfers the INVITE message to the SIP server to which the communication device is not logged in. However, by performing the processing from step 2001 to step 2005, it is possible to transmit the INVITE message to the SIP server to which the communication device is logged in, and the call information DB of the SIP server to which the communication device is logged in can be properly updated.

In the present embodiment, since the TLS communication used between the SIP server and the communication device is a connection-type communication, the processing shifts to step 2006 after the determination in step 2000.

In step 2006, the SIP server 11 searches to find out whether or not the SIP-URI of the receiver of the INVITE message (communication device 52 in FIG. 10) is registered in the registrar DB 21.

Here, if the SIP-URI of the receiver of the INVITE message is registered in the registrar DB 21, the session managing unit 104 records in the call information DB 41, identification information of the communication session indicated by the Call-ID header of the INVITE message, identification information of the communication source indicated by a "From" message, identification information of the communication destination indicated by a "To" message, and information that the communication session is in the state of "calling (waiting for a response from the receiving end)" (step 2010). The SIP server 11 transmits an INVITE message to the IP address that is associated with the SIP-URI (step 2011). On this occasion, the SIP server 11 includes, in the Via header of the INVITE message, the information of the SIP server 11.

On the other hand, if the SIP-URI of the receiver of the INVITE message is not registered in the registrar DB 21, the SIP server 11 transmits an SIP server search request message 81 to the administrative DB 40 in step 2008 (S103 in FIG. 10), and makes a search for the SIP server to which the receiver of the INVITE message is logged in.

When the SIP server 11 has received the SIP server search response message 82 from the administrative DB 40 (S104 in FIG. 10), and the information of the SIP server (corresponding to the SIP server 13 in FIG. 10), to which the receiver of the INVITE message is logged in, is successfully obtained, the session managing unit 104 records in the call information DB 41 the identification information of the communication session indicated by the Call-ID header of the INVITE message and information that the communication session is in the state of "calling (waiting for a response from the receiving end)". Thereafter, the SIP server 11 transmits the INVITE message to the IP address of the SIP server obtained from the SIP server search response message 82 (S15). On this occasion, the SIP server 11 includes in the Via header of the INVITE message the information of the SIP server 11.

It is to be noted that in cases in which the SIP server 11 fails to acquire the information of the SIP server to which the receiver of the INVITE message is logged in, the SIP server 11 transmits to the sender of the INVITE message an SIP response message representing an error (step 2020).

In FIG. 10, the SIP server 13 that received the INVITE message from the SIP server 11 processes the INVITE message according to the processing flow shown in FIG. 12, similar to the processing in the SIP server 11. As a result, in step 2010, the session managing unit 104 records, in the call information DB 43, identification information of the communication session indicated by the Call-ID header of the INVITE message, and information indicating that the communication session is in the state of "calling (waiting for a response from the receiving end)". Thereafter, the SIP server 13 transmits the INVITE message via the load balancer 30 to the IP address obtained from the registrar DB 23 (S16 and S17).

Since the processing from S17 to S23 is the same as the first embodiment, explanations will be omitted.

In addition, regarding processing for shutting off communication, the sequence and processing are the same as in the first embodiment, other than that the SIP server, which has received the BYE message, processes the BYE message according to the processing flow shown in FIG. 12, and explanations will be omitted.

In the descriptions above, operations in the second embodiment have been explained, for cases where the communication device 51 that has completed the login process receives a service from the communication device 52.

Next, processing will be explained in cases where the communication device 51 and communication device 52 finish usage and provision of the service, and perform logout processing.

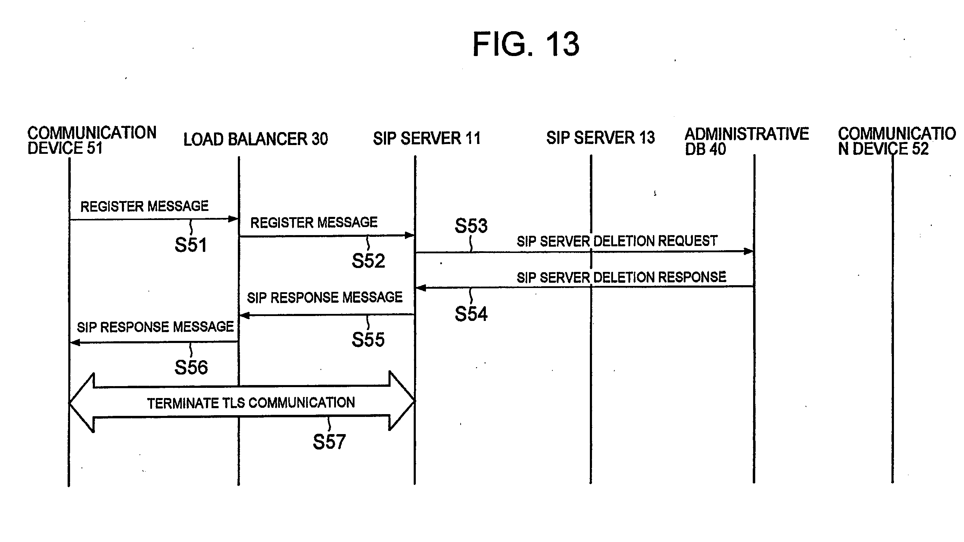

FIG. 13 is a diagram showing a sequence when the communication device 51 performs logout processing.

FIG. 13 illustrates the sequence from S51 to S57 when the communication device 51 logs out.

When the communication device 51 logs out, the communication device 51 firstly transmits to the load balancer 30 a REGISTER message in which a value of an Expires header is set to zero (S51) . The load balancer 30 which received the REGISTER message transfers the REGISTER message to the SIP server 11 (S52).

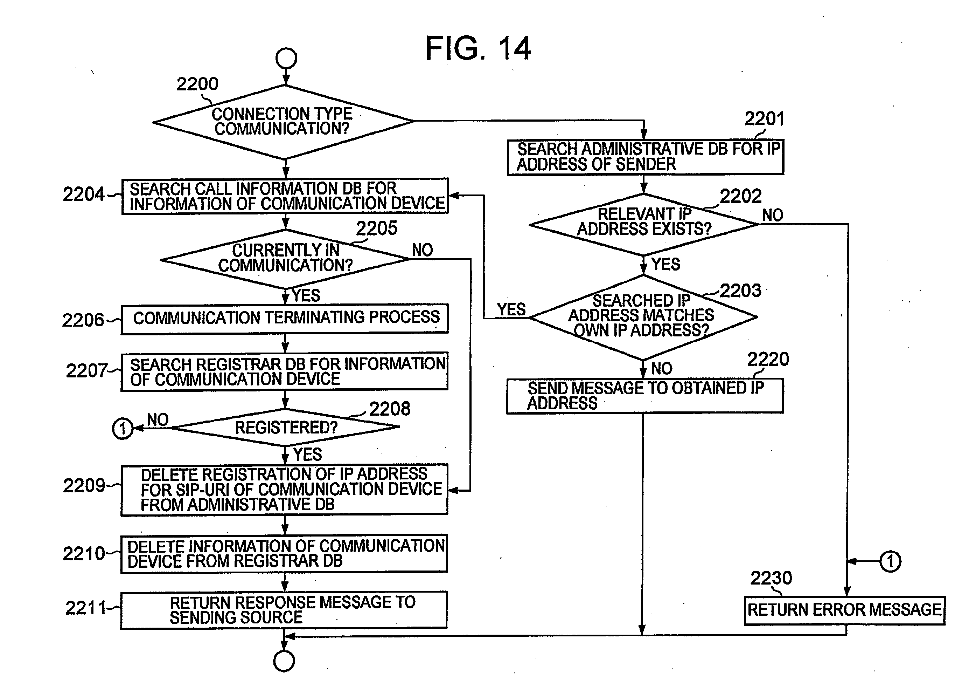

The SIP server 11 which has received the REGISTER message processes the REGISTER message according to the flow as shown in FIG. 14.

In other words, the SIP server 11 firstly determines whether or not the present system employs connection-type communication for the communication between the communication device and the SIP server (step 2200).

Here, if the connection type communication is employed, processing from step 2204 is executed.

On the other hand, if the connection type communication is not employed, the processing shifts to step 2201. The SIP server 11 transmits an SIP server search request message to the administrative DB 40, and makes a search for an SIP server to which the sender of the REGISTER message is logged in (communication device 51 in FIG. 13) . As a result, if any SIP server does not exist, to which the sender of the REGISTER message is logged in, the processing shifts to step 2230, and an SIP response message representing an error is transmitted to the sender of the REGISTER message.

On the other hand, if there exists an SIP server to which the sender of the REGISTER message is logged in, the SIP server 11 checks whether the IP address of the retrieved SIP server agrees with its own IP address (step 2203). In step 2203, if the IP addresses do not match, the SIP server 11 transmits the REGISTER message to the SIP server to which the sender of the REGISTER message is logged in. (On this occasion, it is not necessary for the SIP server 11 to include the information of the SIP server 11 in the Via header of the REGISTER message). On the other hand, if there is a match between the IP addresses and there exists in the Via header of the REGISTER message information regarding the SIP server to which the sender of the REGISTER message is logged in, the SIP.server 11 executes the processing from step 2204.

In the case where connectionless communication is employed, it may happen that when a certain communication device transmits a REGISTER message, the load balancer 30 transfers the REGISTER message to a SIP server to which the communication device is not logged in. However, by performing the processing from step 2201 to step 2203, it is possible to transmit the REGISTER message to the SIP server to which the communication device is logged in, and the registrar DB of the SIP server to which the communication device is logged in can be properly updated.

In step 2204, the SIP server 11 searches the call information DB 41 for an entry that includes the SIP-URI of the sender of the REGISTER message.

At this time, if a relevant entry does not exist (No in step 2205), the processing shifts to step 2209.

On the other hand, if a relevant entry exists (Yes in step 2205), the SIP server executes the processing to terminate the pertinent communication. After the termination of the communication, the processing shifts to step 2207.

In step 2207, the SIP server 11 searches the registrar DB 21 to check whether or not the SIP-URI of the sender of the REGISTER message is registered therein.

If a relevant SIP-URI is not registered (No in step 2208), the processing shifts to step 2230, and the SIP server 11 transmits an SIP response message that represents an error to the sender of the REGISTER message.

On the other hand, if a relevant SIP-URI is registered (Yes in step 2208), the SIP server 11 transmits to the administrative DB 40 an SIP server deletion request message 85 (S53 in FIG. 13).

As shown in FIG. 6, the SIP server deletion request message 85 of the present embodiment is made up of command line including the deletion target SIP-URI (described in FIG. 6 as "DELETE_REQUEST sip: user@hitachi.com"; this indicates a request for deleting the SIP-URI, "user@hitachi.com").

The administrative DB 40 that received the SIP server deletion request message 85 deletes an entry including the SIP-URI that is specified in the SIP server deletion request message 85, and then transmits an SIP server deletion response message 86 to the SIP server 11 (S54 in FIG. 13).

As shown in FIG. 6, the SIP server deletion response message 86 of the present embodiment is made up of command lines including a deletion result of the deletion target SIP-URI (described in FIG. 6 as "DELETE_RESULT SUCCESS"; this indicates that the deletion is successful), and a line indicating the deletion target SIP-URI (described in FIG. 6 as "SIP-URI: sip:user@hitachi.com").

The SIP server 11 that received the SIP server deletion response message 86 shifts the processing to step 2210, and deletes from the registrar DB 21 the entry including the SIP-URI of the sender of the REGISTER message.

Next, the SIP server 11 transmits the SIP response message to the communication device 51 via the load balancer 30, for notifying the sender of the REGISTER message that the processing is successful (S55 and S56 in FIG. 13) .

In the descriptions above, operations of the SIP server 11 have been explained, when the SIP server 11 received the REGISTER message.

The communication device 51 that received the SIP response message terminates the TLS communication (S57).

As described above, operations of the communication device 11 have been explained, when the logout processing is performed. When the communication device 52 performs the logging-out, similar operations are performed with the SIP server 13.

According to the present embodiment, the session management server manages the call information, and therefore the administrative DB is only required to record at least the information regarding the SIP server to which the communication device is logged in.

In the load balancing method as described in Patent Document 2, the shared database is updated every time when one message is processed, and therefore a shared database having an extremely high performance and a high speed communication unit between the session management server and the shared database are required. However, in the present embodiment, neither such high performance for the administrative DB, nor the high-speed communication means between the SIP server and the administrative DB is necessary. In addition, even when multiple session management servers try to control the same call information simultaneously, the state of the administrative DB can be uniquely fixed, unlike the load balancing method as described in Patent Document 2.

Furthermore, in the present embodiment, the shared database is employed instead of the broadcast communication, in order to obtain information of the SIP server that manages the communication device. Therefore, there is an effect in that it is possible to suppress the communications traffic sent and received between the SIP servers.

### <Embodiment 3>

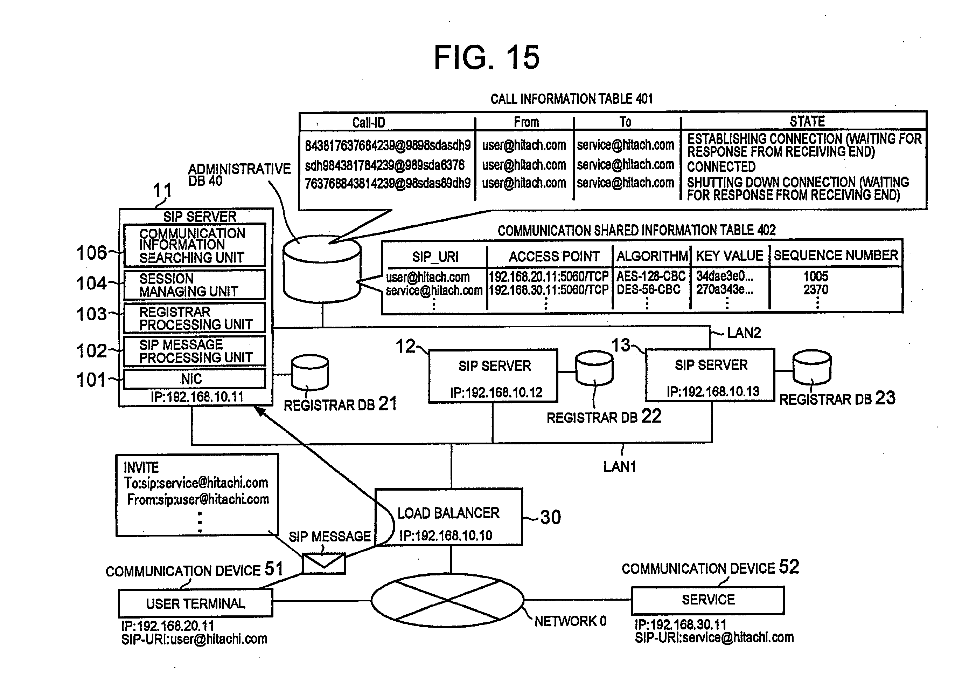

Next, a third embodiment will be explained with reference to FIG. 15 to FIG. 17.

In the first embodiment and the second embodiment, an SIP server that received an SIP message obtains information of a second SIP server to which the destination of the SIP message is logged in, and transmits the SIP message to the second SIP server.

The third embodiment is mainly distinguished in that an administrative DB is provided which is accessible from the SIP server and which manages communication settings for establishing communication with the communication device currently logged in, and in that the SIP server which has received an SIP message obtains communication settings from the administrative DB and communicates with the destination of the SIP message.

FIG. 15 illustrates a system configuration of the third embodiment.

The system illustrated here incorporates three SIP servers (SIP server 11, SIP server 12, SIP server 13), the load balancer 30, the administrative DB 40, the communication device 51, and the communication device 52, and three SIP servers and the load balancer 30 are coupled via the LAN 1, three SIP servers and the administrative DB 40 are coupled via the LAN 2, and further, the load balancer 30, the communication device 51, and the communication device 52 are coupled via the network 0.

The SIP server 11 is assigned an IP address of 192.168.10.11, and it is further provided with the registrar DB 21. The SIP server 12 is assigned an IP address of 192.168.10.12, and it is further provided with the registrar DB 22. Furthermore, the SIP server 13 is assigned an IP address of 192.168.10.13, and it is further provided with the registrar DB 23.

The load balancer is assigned an IP address of 192.168.10.10. It is to be noted that also the load balancer 30 used in the present embodiment has a function in that if another message is received from the same communication device within a predetermined period, the load balancer 30 transfers the message to the SIP server to which a message was transferred just before.

In addition, the IP address of 192.168.20.11 and the SIP-URI of user@hitachi.com are assigned to the communication device 51. The IP address of 192.168.30.11 and the SIP-URI of service@hitachi.com are assigned to the communication device 52. The software structures of the communication device 51 and the communication device 52 are the same as the software structures of the communication device 51 and the communication device 52 according to the second embodiment.

Furthermore, the administrative DB 40 of the present embodiment is made up of a call information table 401 for recording the call information managed by the SIP server 11, SIP server 12, and SIP server 13, and a communication shared information table 402 for recording communication settings for the SIP server 11, SIP server 12, and SIP server 13 to perform communication with the communication device 51 and communication device 52. Here, the call information table 401 records a Call-ID as identification information of a communication session, the SIP-URI of a communication session sender, the SIP-URI of a communication session receiver, and a state of the communication session. In addition, the communication shared information table 402 records the SIP-URI being the identification information of a communication device, access point information (i.e., a combination of IP address, port number, and transport layer protocol type) in establishing communication with the communication device, an encryption algorithm type used for encrypted communication with the communication device, a value of key used for the encrypted communication, and a sequence number for identifying the sequence of the message.

Hereinafter, the third embodiment will be explained, taking a communication procedure as an example, in cases where the communication device 51 shown in FIG. 15 performs data communication with the communication device 52.

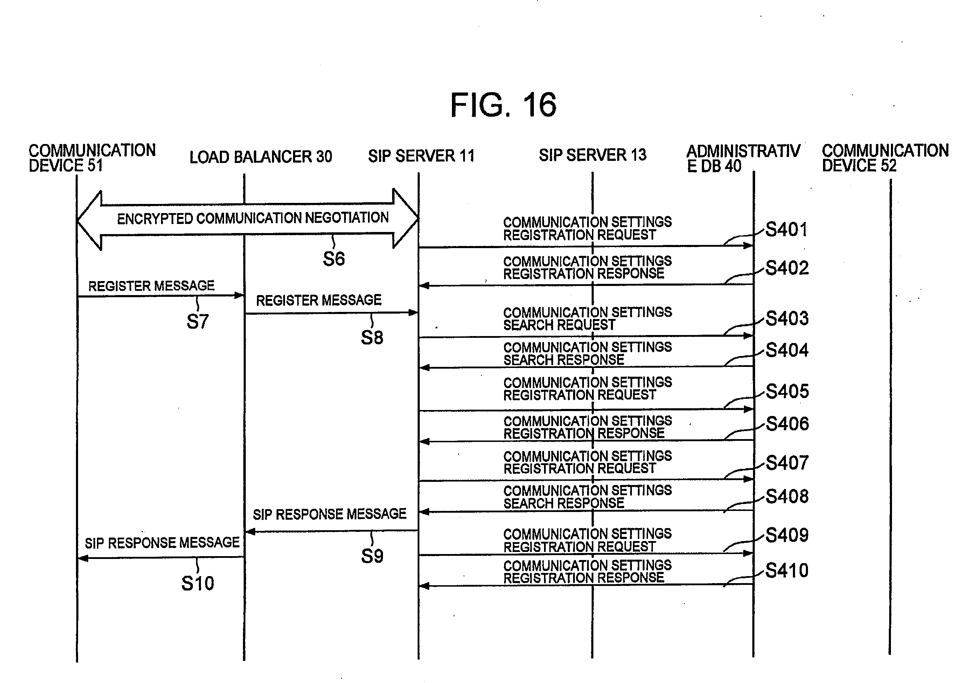

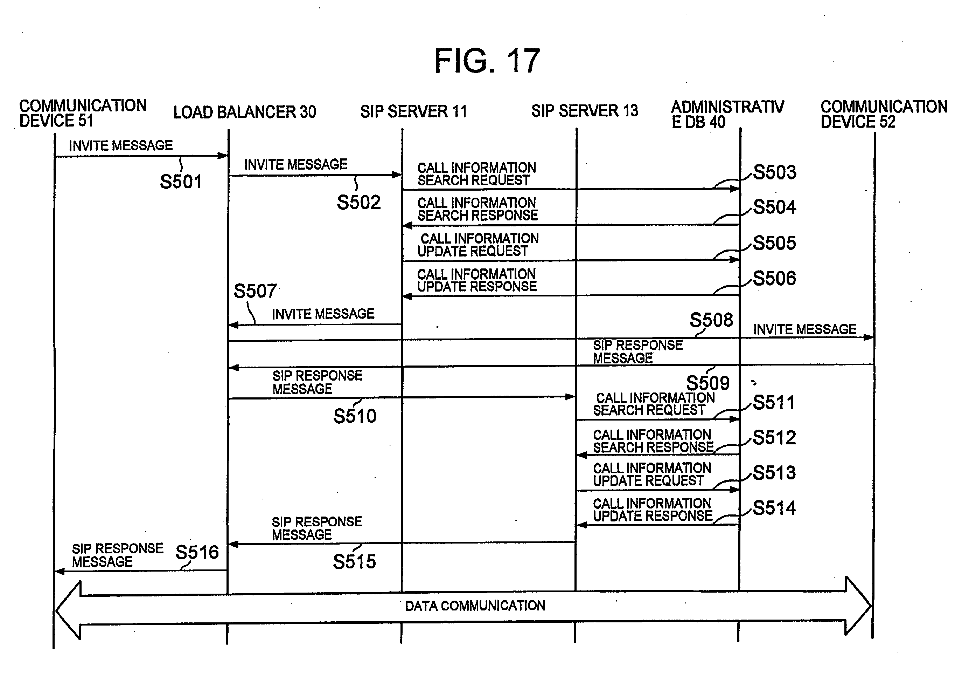

FIG. 16 and FIG. 17 are sequence diagrams, each showing the data communication according to the third embodiment. Explanations are omitted as much as possible concerning steps and messages having the same reference symbols as FIG. 3 and FIG. 4, which have already been explained in the first embodiment.

FIG. 16 is a diagram showing the sequence in cases where the communication device 51 performs a login process to the SIP server.

In the present embodiment, when the communication device 51 has established encrypted communication with the SIP server (in FIG. 16, SIP server 11) by performing negotiation for the encrypted communication (S6), the SIP server 11 registers in the administrative DB 40 communication settings of the established encrypted communication (S401, S402).

Next, the SIP server 11, which has received a REGISTER message that the communication device 51 transmitted, acquires from the administrative DB 40 the communication settings between the SIP server 11 and the communication device 51 (S403, S404), and decrypts the REGISTER message by using the settings. Here, if the message is successfully decrypted, the communication settings between the SIP server 11 and the communication device 51, which are recorded in the administrative DB 40, are updated (S405, S406).

Next, when the SIP server 11 creates an SIP response message for the REGISTER message, the SIP server 11 acquires the communication settings with the communication device 51 from the administrative DB (S407, S408), encrypts the SIP response message by using the settings, and transmits the encrypted message to the communication device 51 (S9, S10). When the transmission of the message is completed, the SIP server 11 updates the communication settings between the SIP server 11 and the communication device 51 (S409, S410).

According to the procedure above, the login of the communication device 51 is completed.

As discussed above, in the present embodiment, the SIP server acquires from the administrative DB 40 the communication settings between the SIP server and the communication device, performs encryption and decryption processing, and simultaneously updates the communication settings recorded in the administrative DB 40 every time the SIP server exchanges an SIP message and an SIP response message with the communication device. In the following, for ease of explanation, the processing for acquiring the communication settings from the administrative DB 40 and updating thereof will be omitted.

FIG. 17 is a diagram showing a sequence in cases where the communication device 51 establishes communication with the communication device 52.

Firstly, when the communication device 51 establishes a communication session with the communication device 52, the communication device 51 transmits an INVITE message to the load balancer 30 (S501).

Upon receipt of the INVITE message, the load balancer selects an SIP server out of three SIP servers to transfer the INVITE message, and transfers the INVITE message to the selected SIP server (S502) . FIG. 17 shows cases where the SIP server 11 is selected as the transfer target SIP server.

The SIP server 11 that received the INVITE message searches the call information table 402 in the administrative DB 40 to check whether or not the call information having the identification information of the communication session indicated by the Call-ID header of the INVITE message is registered (S503, S504).

Here, if the call information having the identification information of the communication session indicated by the Call-ID header of the INVITE message is registered, the SIP server transmits an SIP response message via the load balancer 30 to the communication device 51, giving notification that the communication session is already being processed.

On the other hand, if the call information having the identification information of the communication session indicated by the Call-ID header of the INVITE message is not registered, the SIP server transmits a call information update request message to the call information table 402 in the administrative DB, and records in the call information table 402 identification information of the communication session indicated by the Call-ID header of the INVITE message, an SIP-URI of the INVITE message sender, an SIP-URI of the INVITE message destination, and the fact that the communication session is in the state of "calling (waiting for a response from the receiving end) " (S505, S506). Next, the SIP server 11 transmits the INVITE message, via the load balancer 30, to the communication device 52 that is assigned as the destination of the INVITE message (S507, S508).

The communication device 52 that received the INVITE message creates an SIP response message for the INVITE message, and transmits the message to the load balancer 30 (S509).

Upon receipt of the SIP response message, the load balancer 30 selects from three SIP servers an SIP server for transferring the SIP response message, and transfers the SIP response message to the SIP server being selected (S510). FIG. 17 illustrates cases where the SIP server 13 is selected as the transfer target SIP server.

The SIP server 13 that received the SIP response message searches the call information table 402 of the administrative DB 40, to check whether or not the call information having the identification information of the communication session indicated by the Call-ID header of the SIP response message is registered (S511, S512).

Here, if the call information having the identification information of the communication session indicated by the Call-ID header of the SIP response message is not registered, the SIP server 13 transmits, via the load balancer 30 to the communication device 52, an SIP response message indicating that an error has occurred.

On the other hand, if the call information having the identification information of the communication session indicated by the Call-ID header of the SIP response message is registered, and if the description of the SIP response message indicates "communication not permitted", the SIP server 13 transmits a call information update request message to the call information table 402 in the administrative DB 40, and deletes the call information of the communication session indicated by the Call-ID header of the SIP response message in the call information table 402. On the other hand, if the description of the SIP response message indicates "communication permitted", the SIP server 13 transmits the call information update request message to the call information table 402 of the administrative DB 40, and updates the state of the call information of the communication session indicated by the Call-ID header of the SIP response message in the call information table 402 to "established" (S513, 5514). Next, the SIP server 13 transmits the SIP response message, via the load balancer 30, to the communication device 51 that is assigned as a sending destination of the SIP response message (S515, S516).

As discussed above, in the present embodiment, the SIP server acquires call information regarding the communication session from the administrative DB 40 and processes the message, every time the SIP server receives an INVITE message from and transmits an SIP response message for the INVITE message to the communication device. In accordance with the result after the processing, the SIP server 11 updates the call information recorded in the administrative DB 40. It is to be noted here that in the present embodiment, upon receipt of a BYE message or an SIP response message for the BYE message, the SIP server 11 acquires, from the administrative DB 40, call information regarding the communication session, and processes the message. Further, in accordance with the result after the processing, the SIP serer 11 updates the call information recorded in the administrative DB 40.

In the present embodiment, a shared database is provided that is accessible from the SIP server, and that records communication settings for performing communication with the communication device. Therefore, the SIP server that received the SIP message or the SIP response message, refers to the shared database and acquires the communication settings, thereby producing an effect in that even the SIP server, to which the sending source of the SIP message or the SIP response message does not log in, is capable of processing the message (for example, if encrypted communication is performed, decryption can be properly carried out).

Further in the present embodiment, the SIP server acquires the communication settings by referring to the shared database, when the SIP message or the SIP response message is transmitted. Therefore, there is an effect in the message can be directly transmitted to the communication device, without transmitting the message to the SIP server to which the communication device as a sending destination of the SIP message or the SIP response message is logged in.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. A data communication system for managing mutual data communication between multiple communication devices, the system comprising:
multiple session management servers which manage a session of the data communication between the communication devices;
a load balancer which assigns, to any of the session management servers, a communication message from a first communication device to a second communication device, according to a predetermined criterion, the communication message not being provided with information for identifying a session management server that manages the second communication device; and
a unit which causes the session management server, that has received the communication message from the load balancer, to acquire information necessary for communicating with the second communication device.

2. The data communication system according to claim 1, wherein
the information necessary for communicating with the second communication device is identification information for specifying a session management server to which the second communication device is logged in.

3. The data communication system according to claim 2, wherein the unit which causes the session management server to acquire information necessary for communicating with the second communication device comprises:
an inquiring unit in which the session management server that has received a session establishment request message inquires of another session management server whether or not the second communication device is logged in; and
a responding unit in which the session management server to which the second communication device is logged in makes a response indicating that the second communication device is logged in, to the session management server that has received the session establishment request message.

4. The data communication system according to claim 2, wherein
the unit which causes the session management server to acquire information necessary for communicating with the second communication device further comprises:
a shared database which the multiple session management servers can access, and which records identification information for specifying the session management server to which the communication device is logged in; and
a searching unit in which the session management server that has received the session establishment request message searches the shared database.

5. The data communication system according to claim 2, wherein
the communication message is one of: a session establishment request message and a session establishment response message.

6. The data communication system according to claim 1, wherein
the information necessary for communicating with the second communication device is an encrypted communication setting used for communicating with the second communication device;, and
the unit which causes the session management device to acquire information necessary for communicating with the second communication device comprises:
a shared database which the multiple session management servers can access, and which records the encrypted communication setting used for communicating with the second communication device; and
a searching unit in which the session management server that has received the session establishment request message searches the shared database.

7. The data communication system according to claim 6, wherein
the communication message is one of: a call information search request message and a call information search response message.

8. A session management server for managing a session of mutual data communication between multiple communication devices, the server comprising,
a unit which receives from a load balancer, a communication message from a first communication device to a second communication device, the communication message not specifying a session management server that manages the second communication device; and
a unit which acquires information necessary for communicating with one of the first communication device and the second communication device.

9. The session management server according to claim 8, wherein
the information necessary for communicating with one of the first communication device and the second communication device is identification information for specifying a session management server to which the communication device is logged in.

10. The session management server according to claim 9, wherein the unit which acquires information necessary for communicating with one of the first communication device and the second communication device comprises:
an inquiring unit which inquires of another' session management server whether or not one of the first communication device and the second communication device is logged in; and
a receiving unit which receives information from the session management server to which one of the first communication device and the second communication device is logged in, indicating that one of the first communication device and the second communication device is logged in.

11. The session management server according to claim 9, wherein the unit which acquires information necessary for communicating with one of the first communication device and the second communication device comprises:
a searching unit which searches a shared database that the multiple session management servers can access, and that records identification information for specifying the session management server to which the one of the first communication device and the second communication device is logged in.

12. The session management server according to claim 8, wherein
the communication message is one of a session establishment request message and a session establishment response message.

13. The session management server according to claim 8, wherein
information necessary for communicating with the second communication device is an encrypted communication setting used when communicating with the second communication device, and
the unit which acquires information necessary for communicating with one of the first communication device and the second communication device comprises:
a searching unit which searches a database that records the encrypted communication setting used when communicating with the one of the first communication device and the second communication device.

14. The session management server according to claim 13, wherein
the communication message is one of a call information search request message and a call information search response message.
